# EUROPÄISCHE PATENTSCHRIFT

(11) **EP 2 299 076 B1**
(45) Veröffentlichungstag und Bekanntmachung des Hinweises auf die Patenterteilung: **17.04.2013**
(21) Anmeldenummer: 10188401.3
(22) Anmeldetag: 11.09.2004
(51) Int. Cl.: F01N 3/022

(54) **Partikelfilter für einen Verbrennungsmotor**
Particulate filter for an internal combustion engine
Filtre à particules pour moteur à combustion interne

(30) Priorität: 16.09.2003 DE 10343046
(43) Veröffentlichungstag der Anmeldung: 23.03.2011
(62) Teilanmeldung aus: 04765100.5
(73) Patentinhaber: Deutsches Zentrum für Luft- und Raumfahrt e.V., 51147 Köln (DE); Deutz AG, 51149 Köln (DE)
(72) Erfinder: Hoffschmidt, Bernhard, 51467, Bergisch Gladbach (DE); Fend, Thomas, 51143, Köln (DE); Miebach, Rolf, 50321, Brühl (DE)
(74) Vertreter: von Kreisler Selting Werner

(56) Entgegenhaltungen:
- EP-A- 0 318 958
- EP-A1- 0 308 525
- DE-A1- 3 043 996

## Beschreibung

Die Erfindung betrifft einen Partikelfilter für einen Verbrennungsmotor, mit einem monolithischen porösen Filterkörper, der Zuströmkanäle und Abströmkanäle aufweist, wobei jeder Zuströmkanal mindestens einen Abströmkanal kreuzt, von dem er durch eine Filterwand getrennt ist.

Es ist bekannt, die Abgase von Dieselmotoren durch einen Rußfilter zu leiten, der die Feststoffpartikel zurückhält. Der Ruß, der sich in dem Rußfilter sammelt, wird in Intervallen zu Asche verbrannt. Derartige Rußfilter haben eine Betriebstemperatur in der Größenordnung von 500°C. Für ihre Herstellung stehen Keramiken und Sinterkörper zur Verfügung. Herkömmliche Partikelfilter bestehen aus einem monolithischen Filterkörper aus porösem Material, der längslaufende Kanäle enthält. Diese Kanäle sind abwechselnd an dem einen und an dem gegenüberliegenden anderen Ende geschlossen. Jeweils zwei benachbarte Kanäle bilden einen Zuströmkanal und einen Abströmkanal. Der Filterstrom geht durch die Wand hindurch, welche die beiden Kanäle voneinander trennt. Das bisher einzig für Keramiken zur Verfügung stehende Herstellungsverfahren arbeitet mit Extrusion einer keramischen Masse. Hierbei sind nur Profilstrukturen der Kanäle realisierbar, bei denen die Zuströmkanäle und die Abströmkanäle parallel zueinander verlaufen. An einem Ende ist der jeweilige Kanal durch gezielte Deformierung der Kanalwand verschlossen.

Dies beruht auf der Tatsache, dass bei größeren Abmessungen größere Temperaturdifferenzen und damit größere thermische Spannungen auftreten. Dies bedeutet, dass ein Rußfilter, der für einen Kleinwagen geeignet ist, nicht durch bloße Maßstabsvergrößerung in eine für größere Personenwagen oder gar Lastwagen geeignete Größe gebracht werden kann. Schließlich existiert keine wartungsfreundliche und kompakte Lösung für die Entnahme der bei dem Verbrennungsprozess anfallenden Asche.

In DE 30 43 996 A1 ist ein abgasdurchströmter Schwebeteilchenfilter für Dieselmaschinen beschrieben. Der Schwebeteilchenfilter ist in einem rohrförmigen Gehäuse hinter dem Abgassammelkasten in einer Abgasleitung angeordnet. Der Schwebeteilchenfilter weist innerhalb des Gehäuses ein keramisches Filterelement in Form eines Monolithen auf, der Zuströmkanäle und Abströmkanäle enthält. Die Einlasskanäle verlaufen in mehreren parallelen Ebenen parallel zueinander und die Auslasskanäle verlaufen in den dazwischenliegenden Ebenen, so dass sie die Einlasskanäle kreuzen. Der Monolith ist in das Gehäuse so eingebaut, dass die Auslasskanäle in der Lotrechten liegen und ihre oberen Enden verschlossen sind, während die unteren Enden Verbindung mit dem Auslassrohr haben. Die Einlasskanäle sind an beiden Enden offen und nehmen von den entgegengesetzten Seiten her die Abgase von Abgassammelkästen des Motors auf. Die Rußpartikel verbleiben somit in den Einlasskanälen.

EP 0 308 525 offenbart einen Partikelfilter, der mehrere Zuströmkanäle in Form von Röhren aufweist. Die Rohre sind zwischen zwei Halteplatten befestigt. Die Rohre weisen Filterwände auf, wobei der Raum außerhalb der Rohre als Durchlauf für sauberes Gas wirkt.

Der Erfindung liegt die Aufgabe zugrunde, einen Partikelfilter für einen Verbrennungsmotor zu schaffen, der imstande ist, große Abgasströme, die mit oxidierbaren Partikeln beladen sind, zu reinigen.

Der erfindungsgemäße Partikelfilter weist bei einer ersten Variante die Merkmale des Patentanspruchs 1 auf und in einer zweiten Variante die Merkmale des Patentanspruchs 2.

Gemäß der Erfindung ist vorgesehen, dass die Zuströmkanäle Rohre sind, die ohne gegenseitige Wandberührung durch Kammern hindurchgehen, welche die Abströmkanäle bilden. Damit wird erreicht, dass die gesamte Umfangsfläche der Zuströmkanäle als Filterfläche zur Verfügung steht. Auf diese Weise wird in einem Volumen eine relativ große Filterfläche realisiert. Alternativ ist vorgesehen, dass die Abströmkanäle Rohre sind, die ohne gegenseitige Wandberührung durch Kammern hindurchgehen, welche die Zuströmkanäle bilden.

Bei dem erfindungsgemäßen Filter geht der Gasweg durch die poröse Wand zwischen einem Zuströmkanal und mehreren Abströmkanälen hindurch, während die Asche in dem Zuströmkanal verbleibt und kontinuierlich oder in einem gesonderten Reinigungsprozess aus diesem herausgeführt werden kann. An dem Auslassende der Zuströmkanäle wird ein Gegendruck aufgebaut, um zu bewirken, dass die Gase durch die porösen Wände hindurchgehen. Der Gegendruck wird dadurch erzeugt, dass die Zuströmkanäle in eine geschlossene Kammer münden. Der Ascheraum, in dem die Asche gesammelt wird, kann so groß gewählt werden, dass er imstande ist, über die Lebensdauer des Filters alle Asche aufzunehmen. Alternativ hierzu kann der Ascheraum auch eine Reinigungsöffnung aufweisen, durch die Asche herausgeführt werden kann.

Die einander kreuzenden Zuström- und Abströmkanäle bewirken, dass der Abgasstrom von jedem Zuströmkanal auf mehrere Abströmkanäle verteilt wird. Die Zuströmkanäle haben nicht nur offene Einlässe, sondern auch offene Auslässe. Die in ihnen enthaltenen Partikel können somit zum Auslass transportiert werden. Die Zuströmkanäle bilden für die entstehenden Aschepartikel keine Sackgasse. Damit ist es möglich, die Poren weitgehend freizuhalten und ein Zusetzen des Filters zu vermeiden oder zeitlich hinauszuschieben.

Während konventionelle Filter bei der Regeneration den Nachteil haben, dass es im Endbereich des Filters zu stark überhöhten Temperaturen kommen kann, wird dieser Effekt bei der Erfindung vermieden. Durch die sich kreuzenden Strömungswege entsteht keine den Filter durchlaufende Wärmewelle.

Der Filterkörper kann wegen der sich kreuzenden Kanäle nicht in einem Profilfertigungsverfahren durch Extrudieren u.dgl. hergestellt werden. Die Kanalwände bestehen aus porösen Keramiken (SiC, Al₂O₃ ...) oder metallischen Sintermaterialien, die beim Durchströmen von Gasen die mitgeführten Feststoffpartikel auffangen und aus den Gasen herausfiltern. Das durch die Wand hindurchtretende Gas wird unter einem Winkel > 1° zu den Zuströmkanälen aus dem monolithischen Festkörper abgeführt. Das Kreuzen von Zuströmkanälen und Abströmkanälen bedeutet, dass die Strömungen einen beliebigen Winkel zueinander haben, der von Null verschieden ist.

Die Zuströmkanäle und/oder die Abströmkanäle können jegliche Querschnittsform haben, z.B. runden, dreieckigen oder viereckigen Querschnitt.

Im Folgenden wird unter Bezugnahme auf die Zeichnungen ein Ausführungsbeispiel der Erfindung näher erläutert. Diese Erläuterung ist nicht dahingehend zu verstehen, dass sie den Schutzbereich der Erfindung verringert. Dieser wird vielmehr durch die Patentansprüche bestimmt.

Es zeigen:
- Fig. 1: eine schematische Darstellung eines Längsschnittes durch eine nicht zur Erfindung gehörende erste Ausführungsform des Partikelfilters,
- Fig. 2: einen Schnitt entlang der Linie II-II von Figur 1, und
- Fig. 3: eine perspektivische schematische Darstellung einer erfindungsgemäßen Ausführungsform, bei der die Zuströmkanäle durch Kammern hindurchgehen.

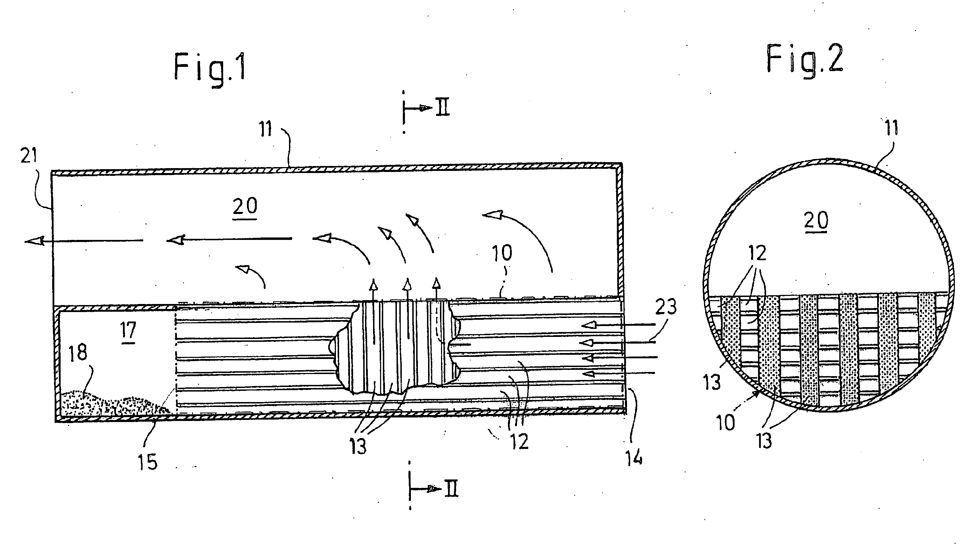

Der in den Figuren 1 und 2 dargestellte Partikelfilter ist ein Rußfilter für einen Dieselmotor. Er besteht aus einem einstückigen porösen Filterkörper 10, der in einem Rohr 11 untergebracht ist und beispielsweise eine Rohrhälfte ausfüllt. Der Filterkörper 10 besteht aus einem porösen Material, insbesondere aus Keramik oder Sintermetall. Er hat eine hohe Temperaturbeständigkeit von mindestens 1500°C.

In dem Filterkörper 10 sind zahlreiche längslaufende Zuströmkanäle 12 ausgebildet, die in Figur 2 hell dargestellt sind. Die Zuströmkanäle haben hier rechteckigen Querschnitt und sie sind durch Umfangswände begrenzt. Jeweils eine Gruppe von Zuströmkanälen 12 ist in einer gemeinsamen Ebene angeordnet. Zwischen zwei benachbarten Ebenen von Zuströmkanälen 12 befindet sich jeweils eine Ebene von Abströmkanälen 13. Die Zuströmkanäle und die Abströmkanäle sind so angeordnet, dass sie sich gegenseitig kreuzen. Bei dem vorliegenden Ausführungsbeispiel verlaufen sie rechtwinkelig zueinander. Zwischen einer Gruppe von Zuströmkanälen 12 und einem Abströmkanal 13 befinden sich Filterwände. Von den vier Wänden, die einen Zuströmkanal 12 begrenzen, wirken bei diesem Ausführungsbeispiel nur zwei Wände als Filterwände, nämlich diejenigen Wände, die den Zuströmkanal 12 von den angrenzenden Abströmkanälen 13 trennen. Die beiden anderen Wände üben keine Filterfunktion aus.

Die Zuströmkanäle 12 erstrecken sich geradlinig durch den Filterkörper 10 hindurch von einem Einlassende 14 bis zu einem Auslassende 15. In dem rohrförmigen Gehäuse 11 ist im Anschluss an das Auslassende 15 ein druckdicht geschlossener Beruhigungsraum 17 vorgesehen, bei dem es sich um einen Ascheraum handelt. In dem Beruhigungsraum wird die Strömungsgeschwindigkeit stark reduziert und die Asche abgelagert. Die Zuströmkanäle 12 münden in den Raum 17, in dem sich ein Druck aufbaut. Dort sammelt sich auch die Asche 18, die in den Zuströmkanälen 12 entstanden ist und infolge von Vibrationen zu dem Raum 17 gelangt ist. Der Raum 17 kann eine Klappe zum Entfernen der Asche 18 enthalten.

Über dem Filterkörper 10 befindet sich in dem Gehäuse 11 ein Raum 20, der sich über die gesamte Länge des Gehäuses 11 erstreckt. In diesen Raum 20 münden die Ausströmkanäle 13 des Filterkörpers 10. Der Raum 20 weist eine Auslassöffnung 21 auf, durch die die gereinigten Gase ausströmen.

Beim Betrieb als Rußfilter werden die Fahrzeugabgase, die durch die Pfeile 23 bezeichnet sind, den Zuströmkanälen 12 zugeführt. Im Filterkörper 10 setzt sich der Ruß ab, während die Gase durch die Filterwände in die Abströmkanäle 13 und von dort in die Kammer 20 strömen.

Zur Regenerierung des Filterkörpers 10 wird dieser erhitzt, so dass der Ruß oxidiert und zu Asche verbrennt. Dadurch werden die Poren der Filterwände wieder frei. Die Asche gelangt durch Vibrationen des Fahrzeugs und unter der Wirkung der Gasströmung in den Raum 17.

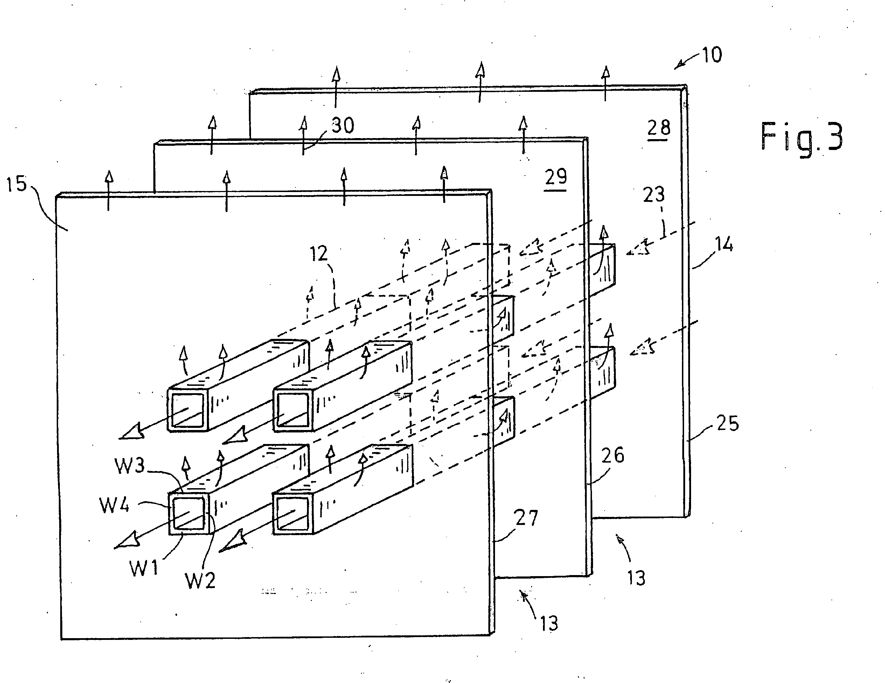

Während bei dem ersten Ausführungsbeispiel nur zwei der vier Wände eines jeden Zuströmkanals 12 als Filterwände wirken, sind bei dem Ausführungsbeispiel von Figur 3 sämtliche vier Wände Filterwände. Bei diesem Ausführungsbeispiel verlaufen die Zuströmkanäle 12 in Form rechteckiger Rohre von einem Einlassende 14 zu einem Auslassende 15. Das Auslassende 15 führt zu einer (nicht dargestellten) geschlossenen Kammer, die als Aschekammer ausgebildet sein kann.

Über die Länge der Zuströmkanäle 12 ist der Filterkörper durch quer verlaufende Wände 25,26 und 27 in Kammern 28,29 unterteilt, die die Abströmkanäle 13 bilden. Die gereinigten Gase 30 verlassen den Filterkörper und gelangen in einen (nicht dargestellten) Sammelraum.

Man erkennt in Figur 3, dass jeder Zuströmkanal vier Filterwände W1,W2,W3 und W4 aufweist. Dies ist dadurch möglich, dass die rohrförmigen Zuströmkanäle 12 gegenseitige Abstände haben. Die Wände 25,26 und 27 dienen auch dazu, die Zuströmkanäle 12 mechanisch zu halten.

Die Funktion des Rußfilters nach Figur 3 ist gleich wie diejenige des ersten Ausführungsbeispiels, so dass eine nochmalige Funktionsbeschreibung unterbleibt.

## Patentansprüche

1. Partikelfilter für einen Verbrennungsmotor, mit einem porösen Filterkörper (10), der Zuströmkanäle (12) und Abströmkanäle (13) aufweist, wobei jeder Zuströmkanal (12) mindestens einen Abströmkanal (13) kreuzt, von dem er durch eine Filterwand (W1,W2,W3,W4) getrennt ist,
**dadurch gekennzeichnet,**
**dass** die Zuströmkanäle (12) Rohre sind, die ohne gegenseitige Wandberührung durch Kammern (28,29) hindurchgehen, welche die Abströmkanäle (13) bilden.

2. Partikelfilter für einen Verbrennungsmotor, mit einem porösen Filterkörper (10), der Zuströmkanäle (12) und Abströmkanäle (13) aufweist, wobei jeder Zuströmkanal (12) mindestens einen Abströmkanal (13) kreuzt, von dem er durch eine Filterwand (W1,W2,W3,W4) getrennt ist,
**dadurch gekennzeichnet, dass**
die Abströmkanäle (13) Rohre sind, die ohne gegenseitige Wandberührung durch Kammern hindurchgehen, welche die Zuströmkanäle (12) bilden.

3. Partikelfilter nach Anspruch 1 oder 2, **dadurch gekennzeichnet, dass** die Zuströmkanäle (12) in einen Beruhigungsraum (17) münden, der ein Ascheraum zur Ablagerung der Asche ist.

4. Partikelfilter nach Anspruch 1 oder 2, **dadurch gekennzeichnet, dass** jeder Zuströmkanal (12) mehrere Abströmkanäle (13) und jeder Abströmkanal mehrere Zuströmkanäle kreuzt.

5. Partikelfilter nach Anspruch 3, **dadurch gekennzeichnet, dass** der Beruhigungsraum (17) eine Klappe zum Entfernen der Asche (18) aufweist.

## Claims

1. A particle filter for an internal combustion engine, comprising a porous filter body (10) having inflow channels (12) and outflow channels (13), each inflow channel (12) intersecting at least one outflow channel (13) while being separated therefrom by a filter wall (W1,W2,W3,W4),
**characterized in**
**that** said inflow channels (12) are tubes which, without mutual wall contact, extend through chambers (28,29) forming said outflow channels (13).

2. A particle filter for an internal combustion engine, comprising a porous filter body (10) having inflow channels (12) and outflow channels (13), each inflow channel (12) intersecting at least one outflow channel (13) while being separated therefrom by a filter wall (W1,W2,W3,W4),
**characterized in**
**that** said outflow channels (13) are tubes which, without mutual wall contact, extend through chambers (28,29) forming said inflow channels (12).

3. The particle filter according to claim 1 or 2, **characterized in that** the inflow channels (12) are arranged to enter a settling chamber (17) formed as an ash chamber for deposition of the ash.

4. The particle filter according to claim 1 or 2, **characterized in that** each inflow channel (12) intersects a plurality of outflow channels (13) and that each outflow channel intersects a plurality of inflow channels.

5. The particle filter according to claim 3, **characterized in that** the settling chamber (17) is provided with a flap for removal of the ash (18).

## Revendications

1. Filtre à particules pour moteur à combustion interne, comprenant un corps de filtre poreux (10) qui comporte des canaux d'entrée (12) et des canaux de sortie (13), chaque canal d'entrée (12) croisant au moins un canal de sortie (13) dont il est séparé par une paroi filtrante (W1, W2, W3, W4),
**caractérisé en ce que**
les canaux d'entrée (12) sont des tubes qui passent à travers des chambres (28, 29) qui forment les canaux de sortie (13) sans contact mutuel entre les parois.

2. Filtre à particules pour moteur à combustion interne, comprenant un corps de filtre poreux (10) qui comporte des canaux d'entrée (12) et des canaux de sortie (13), chaque canal d'entrée (12) croisant au moins un canal de sortie (13) dont il est séparé par une paroi filtrante (W1, W2, W3, W4),
**caractérisé en ce que**
les canaux de sortie (13) sont des tubes qui passent à travers des chambres qui forment les canaux d'entrée (12) sans contact mutuel entre les parois.

3. Filtre à particules selon la revendication 1 ou 2, **caractérisé en ce que** les canaux d'entrée (12) débouchent dans une chambre de tranquillisation (17) qui est une chambre à cendre servant pour le stockage de la cendre.

4. Filtre à particules selon la revendication 1 ou 2, caractérisé en ce chaque canal d'entrée (12) croise plusieurs canaux de sortie (13) et que chaque canal de sortie croise plusieurs canaux d'entrée.

5. Filtre à particules selon la revendication 3, **caractérisé en ce que** la chambre de tranquillisation (17) comporte une trappe pour l'évacuation de la cendre (18).
